# EUROPÄISCHE PATENTANMELDUNG

(11) **EP 0 590 713 A2**
(43) Veröffentlichungstag der Anmeldung: **06.04.1994**
(21) Anmeldenummer: 93202718.8
(22) Anmeldetag: 20.09.1993
(51) Int. Cl.: G01L 1/22

(54) **Kreisplattenfeder für eine Kraftmesszelle**

(30) Priorität: 30.09.1992 DE 4232785
(71) Anmelder: Philips Patentverwaltung GmbH, 22335 Hamburg (DE); Philips Electronics N.V., 5621 BA Eindhoven (NL)
(72) Erfinder: Golla, Lothar, c/o Philips Patentverwaltung Gmbh, D-20097 Hamburg (DE)
(74) Vertreter: Kupfermann, Fritz-Joachim, Dipl.-Ing.

(57) **Zusammenfassung**

Die Erfindung betrifft eine Kreisplattenfeder (8) für eine Kraftmeßzelle mit zentral eingeleiteter Kraft F, einem biegesteifem abstützenden Außenrand (2), einer ersten der Krafteinleitung zugewandten axialsymmetrisch profilierten Oberfläche (6) und einer dieser gegenüberliegenden zweiten Oberfläche (5), auf der mindestens je ein Dehnungsmeßstreifen innerhalb und außerhalb einer umlaufenden radialdehnungsfreien Linie angeordnet ist, welche eine radiale und tangentiale Zugspannungen gezielt berücksichtigende Dehnungsverteilung auf der mit Dehnungsmeßstreifen (3, 4) versehenen Oberfläche (5) aufweist, wobei die erste und/oder zweite Oberfläche (6, 5) mindestens teilweise einen annähernd kegelförmigen Abschnitt (7) aufweisen, um bei einer Belastung zunächst eine Druck- und anschließend eine linearisierende bestimmte radial und tangential wirkende Zugspannung in der Kreisplattenfeder (8) zu erzeugen.

## Beschreibung

Die Erfindung betrifft eine Kreisplattenfeder für eine Kraftmeßzelle mit zentral eingeleiteter Kraft, biegesteifem abstützenden Außenrand, einer ersten der Krafteinleitung zugewandten axialsymmetrisch profilierten Oberfläche und einer dieser gegenüberliegenden zweiten Oberfläche, auf der mindestens je ein Dehnungsmeßstreifen innerhalb und außerhalb einer umlaufenden radialdehnungsfreien Linie angeordnet ist.

Derartige Kreisplattenfedern für Kraftmeßzellen sind bekannt und stellen einen besonders geeigneten Federkörper für flache, kompakte Kraftmeßzellen dar, deren radiale Spannungsverteilung zur günstigen Anbringung von Meßfühlern, wie Dehnungsmeßstreifen, sich durch geeignete Profilierung der Kreisplattenfeder in weiten Grenzen variieren läßt.

Aus der deutschen Patentanmeldung DE-A1-38 23 673 ist ein Aufnehmer mit letztlich einer Kreisplattenfeder bekannt, die einen als Auflage dienenden Randbereich und eine zur Kraft hinweisende profilierte Oberfläche hat. Die andere Oberfläche ist plan ausgestaltet, um in Folien- oder Dünnfilmtechnik aufgebrachte Dehnungsmeßstreifen aufzunehmen. Die Kreisplattenfeder ist verhältnismäßig dünn, so daß eine Dehnungsjustierung, d.h. gleichmäßige Aufteilung der radial gestauchten und gedehnten Oberfläche auf die Dehnungsmeßstreifen möglich ist. Diese im Stand der Technik bekannte Profilierung einer Oberfläche erfolgt also mit dem Ziel der gleichmäßigen Aufteilung der durch die zu messende Kraft radial gestauchten und gedehnten Oberfläche auf die Dehnungsmeßstreifen.

Weiter ist aus der deutschen Patentanmeldung DE-A1-40 09 019 eine Kreisplattenfeder für eine Kraftmeßzelle bekannt, die insbesondere auch für hohe Belastungen die Vorteile der bekannten Kreisplattenfeder und eine harmonisierte Dehnungsverteilung der mit Dehnungsmeßstreifen versehenen Oberfläche aufweist. Um bei dieser verhältnismäßig dicken Kreisplattenfeder vornehmlich für hohe Lasten, die einseitige Profilierung dennoch auf die Dehnungsmeßstreifen durchgreifen zu lassen, wird vorgeschlagen, auf der mit Dehnungsmeßstreifen versehenen Oberfläche in einem mittleren Bereich eine Ausnehmung anzuordnen, mit dem Ziel, der Erniedrigung der zentrumsnahen positiven Dehnung der mit Dehnungsmeßstreifen versehenen Oberfläche.

Versuche haben jedoch ergeben, daß mit diesen bekannten Kreisplattenfedern zwar grundsätzlich Messungen durchgeführt werden können, jedoch bauformbedingt die Abhängigkeit der Dehnung von der Last nicht linear verläuft. Denn bei Belastung der bekannten Kraftmeßzellen ist zu erkennen, daß der weiter im Zentrum angeordnete Dehnungsmeßstreifen mit zunehmender Belastung immer empfindlicher wird, während der weiter außen angeordnete Dehnungsmeßstreifen dagegen immer unempfindlicher wird, d.h. weniger stark gedehnt wird. Da diese beiden Effekte nicht im Gleichgewicht sind, ergibt sich ein resultierender Signalverlauf, der als Linearitätsfehler der Kreisplattenfeder sichtbar gemacht werden kann. Dieser Effekt ist auf weiter unten näher erläuterte radiale und tangentiale Zugspannungen in der Kreisplattenfeder zurückzuführen.

Aufgabe der vorliegenden Erfindung ist es, eine Kreisplattenfeder zu schaffen, die eine die radialen und tangentialen Zugspannungen gezielt berücksichtigende Dehnungsverteilung auf der mit Dehnungsmeßstreifen versehenen Oberfläche aufweist.

Diese Aufgabe wird erfindungsgemäß dadurch gelöst, daß die erste und/oder zweite Oberfläche mindestens teilweise einen annähernd kegelförmigen Abschnitt aufweisen, um bei Belastung mit der Kraft F zunächst eine Druck- und anschließend eine linearisierende bestimmte radial und tangential wirkende Zugspannung in der Kreisplattenfeder zu erzeugen.

Weitere bevorzugte Ausgestaltungen der Erfindung ergeben sich aus den Unteransprüchen.

Bauformabhängig haben also die im Stand der Technik bekannten Kreisplattenfedern den Nachteil, daß deren Dehnung abhängig von der einwirkenden Kraft nicht linear verläuft. Dieses Signalverhalten läßt sich folgendermaßen erklären. Die Bauform der bekannten Kreisplattenfedern bildet im wesentlichen eine flache Tellerfeder. Diese wird durch das Einwirken der Kraft F wie ein Trommelfell gespannt und gedehnt. Dadurch entsteht eine radiale und tangentiale Zugspannung in der gesamten Kreisplattenfeder, die die durch die einwirkende Kraft F verursachte Biegebeanspruchung überlagert. Diese überlagerte Spannung ist in der Nähe des Zentrums am stärksten und nimmt zum Rand hin ab. Das Nutzsignal wird jedoch durch Biegung der Kreisplattenfeder gebildet, wobei weiter außen angeordnete Dehnungsmeßstreifen eine negative Dehnung, also eine Stauchung, und weiter zum Zentrum angeordnete innere Dehnungsmeßstreifen eine positive Dehnung erfahren. Die überlagerte Spannung wirkt auf weiter innen, wie auf weiter außen angeordnete Dehnungsmeßstreifen im Falle der Einwirkung der Kraft F als positive Dehnung, hat jedoch radial abhängig eine unterschiedliche Größe, woraus letztlich der bei den bekannten Kreisplattenfedern festzustellende Linearitätsfehler resultiert.

Erfindungsgemäß hat sich nun gezeigt, daß dieser Nachteil durch eine besondere Gestaltung des Querschnittprofils der Kreisplattenfeder weitgehend vermieden werden kann. Die Kreisplattenfeder wird erfindungsgemäß dazu derart annähernd kegelförmig ausgestaltet, daß im ersten Teil der Belastung durch die eingeleitete Kraft F nur eine Druckspannung in die Kreisplattenfeder eingebracht wird. Vorteilhaft wird die beschriebene überlagerte Zugspannung dann erst etwa in der zweiten Hälfte der maximalen Belastung wirksam. Durch geeignete Auslegung des Neigungswinkels kann hierdurch erreicht werden, daß der nachteilige Linearitätsfehler minimiert bzw. eliminiert wird.

Eine besonders einfache Ausgestaltung der erfindungsgemäßen Kreisplattenfeder wird dadurch erreicht, daß dieselbe aus einer kegelförmigen ersten und zweiten Oberfläche besteht, wobei die erste Oberfläche im Zentrum einen Ansatz zur Einleitung der Kraft F aufweist und ferner die Kreisplattenfeder einen äußeren sie begrenzenden verstärkten Außenrand zwecks Lagerung aufweist. Der Neigungswinkel der kegelförmigen ersten und zweiten Oberfläche kann derart bemessen werden, daß der Linearitätsfehler nahezu verschwindet. Bei dieser Ausgestaltung mit einer kegelförmigen zweiten Oberfläche ist nachteilig hinzunehmen, daß die Dehnungsmeßstreifen nur aufgeklebt werden können.

Wenn jedoch nur ein kegelförmiger Abschnitt der Kreisplattenfeder vorgesehen wird, dann kann diese zweite Oberfläche teilweise auch plan ausgestaltet sein, so daß in vorteilhafter Weise die Dehnungsmeßstreifen in Dünnfilm- oder Dickschichttechnik aufgebracht sein können. Bei einer derartigen Ausgestaltung der Kreisplattenfeder ist der Neigungswinkel des kegeligen Abschnittes der entsprechenden Fläche dann jedoch größer zu bemessen, als wenn beispielsweise die zweite Oberfläche vollständig kegelig ausgebildet ist.

Erfindungsgemäß soll somit letztlich die im Zentrum höhere, radial nach außen abnehmende und überlagerte Zugspannung dadurch ausgeglichen werden, daß sie in einem weiten Bereich der Belastung quasi nicht entsteht, so daß der verbleibende Belastungsbereich dann eine ausgeglichene überlagerte Beeinflussung durch diese überlagerte Zugspannung erfährt. Die erfindungsgemäße Kreisplattenfeder trägt diesem Erfordernis Rechnung.

Es ist somit möglich, den Linearitätsfehler bei nahezu Null einzustellen. Es ist erfindungsgemäß jedoch auch möglich, beispielsweise gezielt eine negative Linearitätskurve zu bewirken, um eine Hysterese des Signalverlaufes zu berücksichtigen und so eine geringere Abweichung des Gesamtsignals, also beider Dehnungsmeßstreifen von der idealen Gerade zu erreichen.

Versuche haben überdies gezeigt, daß der Neigungswinkel des kegelförmigen Abschnittes von dessen radialer Erstreckung abhängig ist, d.h. daß ein verhältnismäßig langer radialer kegelförmiger Abschnitt einen geringeren Neigungswinkel für die gleiche Wirkung benötigt als ein kürzerer kegelförmiger Abschnitt. Ferner wird darauf hingewiesen, daß der Übergang zwischen der ersten Oberfläche einerseits und dem Ansatz und/oder dem Außenrand mit einer Rundung o.dgl. ausgeführt ist. Die überlagerte und erfindungsgemäß zu beeinflussende Zugspannung wirkt an sich überall in der Kreisplattenfeder, jedoch besonders im Bereich der Dehnungsmeßstreifen, also im Bereich zwischen dem Ansatz und dem Außenrand auf der zweiten Oberfläche.

Ausführungsbeispiele der Erfindung werden nachstehend anhand einer Zeichnung näher erläutert. Darin zeigt:
- Fig. 1: eine erste Alternative einer erfindungsgemäßen Kreisplattenfeder,
- Fig. 2: eine zweite Alternative einer erfindungsgemäßen Kreisplattenfeder,
- Fig. 3: eine dritte Alternative einer erfindungsgemäßen Kreisplattenfeder,
- Fig. 4: eine vierte Alternative einer erfindungsgemäßen Kreisplattenfeder, und
- Fig. 5: einen qualitativen Signalverlauf einer erfindungsgemäßen Kreisplattenfeder nach den Fig. 1 bis 4.

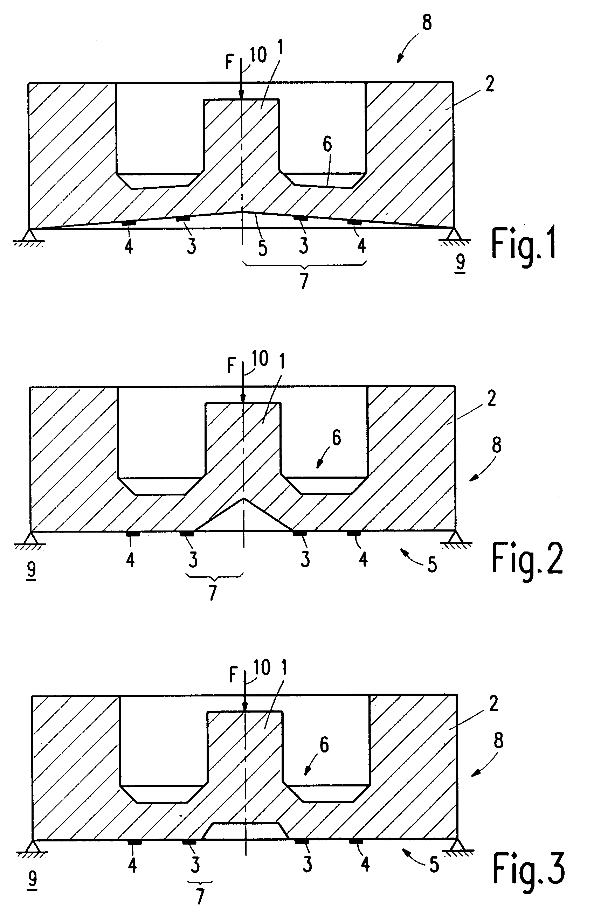

Fig. 1 zeigt eine erfindungsgemäße Kreisplattenfeder 8, bestehend aus einem Außenrand 2, der sich auf eine nicht weiter erläuterte Unterlage 9 abstützt, und aus einem Ansatz 1 über den eine zu messende Kraft F in Pfeilrichtung 10 auf Kreisplattenfeder 8 geleitet wird. Der Ansatz 1 ist auf einer sich bis zum Außenrand 2 erstreckenden ersten Oberfläche 6 angeordnet, die parallel zu einer zweiten, die Kreisplattenfeder 8 in Fig. 1 nach unten begrenzenden Oberfläche 5 verläuft, welche gemäß diesem Ausführungsbeispiel vollständig kegelförmig ausgebildet ist. Im Abschnitt 7 zwischen dem Zentrum und dem äußeren Rand verlaufen diese beiden Oberflächen 5 und 6 somit letztlich parallel und kegelförmig, so daß im Falle einer eingeleiteten Kraft F in Pfeilrichtung 10 zunächst nur eine Druckspannung ausgeübt wird, bevor die Kreisplattenfeder 8 bzw. die Oberflächen 5, 6 wie ein Trommelfell gespannt werden. Der Neigungswinkel der kegelförmig verlaufenden Oberfläche bestimmt dabei die Kraft F, bei welcher eine überlagerte Zugspannung entsteht. Hierdurch kann erfindungsgemäß die im Zentrum größere überlagerte Zugspannung teilweise sozusagen gekappt werden, so daß die verbleibende wirkende überlagerte Zugspannung dann auf die auf der zweiten Oberfläche 5 angeordneten Dehnungsmeßstreifen 3 und 4 symmetrisch wirkt. Die auf diese zweite Oberfläche 5 aufgebrachten Dehnungsmeßstreifen 3, 4 können jedoch nur aufgeklebt sein, da diese kegelig ausgestaltet ist.

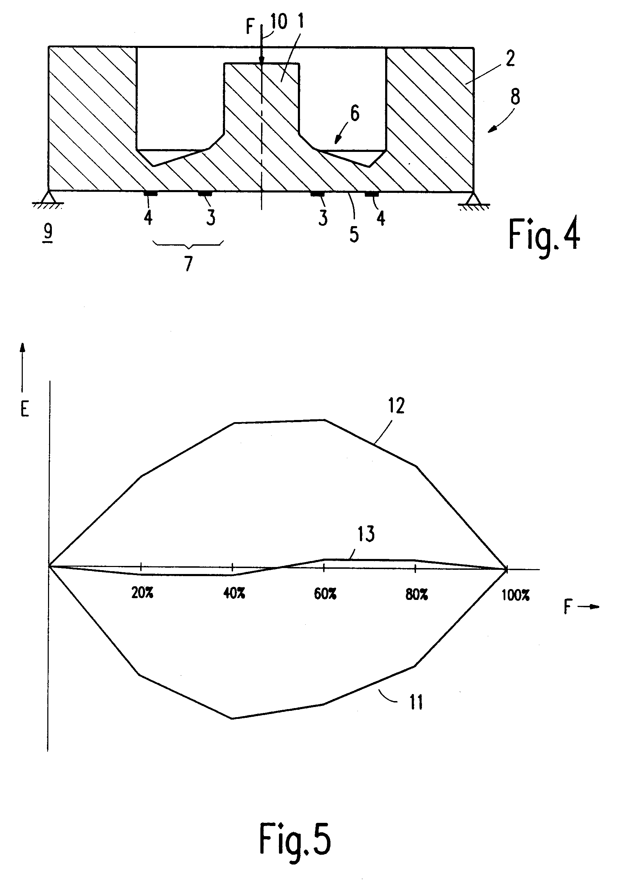

Fig. 2 zeigt ebenso wie Fig. 3 und 4 weitere vorteilhaft ausgestaltete erfindungsgemäße Kreisplattenfedern 8, bei denen es möglich ist, die Dehnungsmeßstreifen 3, 4 in Dünnfilm- oder Dickschichttechnik auf die zweite Oberfläche 5 aufzubringen, die hierzu einen plan ausgestalteten Bereich aufweist.

Fig. 2 zeigt somit eine vorteilhaft ausgestaltete Kreisplattenfeder 8, die mit Ausnahme der Oberflächen 5 und 6 und des Abschnittes 7 der in Fig. 1 beschriebenen Kreisplattenfeder 8 entspricht. Die zweite Oberfläche 5 ist im radial äußeren Bereich plan ausgestaltet, so daß dort die Dehnungsmeßstreifen 3, 4 beispielsweise in Dickschichttechnik aufgebracht sein können. Zum Zentrum weisend ist eine kegelförmige Ausnehmung in der zweiten Oberfläche 5 vorgesehen, die zusammen mit dem entsprechenden Abschnitt der ersten Oberfläche 6 den kegelförmigen Abschnitt 7 bildet. Die erste Oberfläche 6 kann ebenfalls mit einem Ansatz 1 zur Einleitung der Kraft F in Pfeilrichtung 10 versehen sein, und radial außerhalb des Abschnittes 7 parallel zum entsprechenden Abschnitt der zweiten Oberfläche 5 verlaufen. Da bei dieser Ausgestaltung der erfindungsgemäßen Kreisplattenfeder der kegelförmige Abschnitt auf einen radial enger begrenzten Bereich beschränkt ist, ist erfindungsgemäß eine stärkere kegelförmige Neigung dieses Abschnittes 7 vorzusehen, als beispielsweise bei dem gem. Fig. 1.

Fig. 3 zeigt eine weitere Ausgestaltung der erfindungsgemäßen Kreisplattenfeder 8 und bildet im wesentlichen eine Vereinfachung der in Fig. 2 dargestellten Kreisplattenfeder 8, weshalb mit Ausnahme der dort beschriebenen kegelförmigen Ausnehmung auf die entsprechende Beschreibung verwiesen wird. Die kegelförmige Ausnehmung kann, wie in Fig. 3 ersichtlich, nämlich auch kegelstumpfartig in der Fig. 3 nach oben weisend begrenzt sein, ohne daß deren Funktion dadurch beeinträchtigt werden würde. Der wirksame kegelförmige Abschnitt 7 ist dann auf einen noch kleineren radialen Abschnitt zusammengedrängt, weshalb deren Neigung noch verstärkt werden muß, jedoch 90° nicht erreichen darf.

Fig. 4 zeigt die wohl einfachste Version einer erfindungsgemäßen Kreisplattenfeder 8, die an sich einer Ausgestaltung entsprechend Fig. 1 entspricht, bei der allerdings die zweite Oberfläche 5 nicht kegelförmig, sondern vollständig plan auszugestalten ist, wodurch dann auch die Dehnungsmeßstreifen 3, 4 z.B. aufgesputtert werden können. Der kegelförmige Abschnitt 7 wird bei dieser Ausgestaltung allein durch die erste kegelförmig ausgestaltete Oberfläche 6 gebildet, die quasi bis hin zur Außenwand 2 kegelförmig ausgeprägt ist.

Hinsichtlich des Abschnittes 7 wird darauf hingewiesen, daß damit in den Fig. 1 bis 4 immer diejenigen Abschnitte bezeichnet sind, die erfindungsgemäß hauptsächlich wirksam sind. Ferner wird darauf hingewiesen, daß die erste Oberfläche mit einer in den Fig. nicht näher bezeichneten Phase in den Ansatz 1 und den Außenrand 2 übergeht. Diese Phase kann auch rund ausgestaltet sein.

Fig. 5 zeigt den Fehler E einer erfindungsgemäßen Kreisplattenfeder 8 aufgetragen über der Kraft F im Bereich von 0 bis 100 %. Im einzelnen zeigt der Graph 11 den Signalfehler des radial inneren Dehnungsmeßstreifens 3 und der Graph 12 den Signalfehler des radial weiter außen liegenden Dehnungsmeßstreifens 4. Der Graph 13 bildet die Summe der Graphen 11 und 12 und zeigt den Gesamtsignalfehler der Kreisplattenfeder 8. Wie ersichtlich, liegt er nahezu bei Null. Es ist jedoch auch darauf hinzuweisen, daß es ebenso möglich ist, gezielt eine negative Linearitätskurve zu bewirken, um beispielsweise eine Hysterese des Signalverlaufes zu berücksichtigen und so eine geringe Abweichung des Gesamtsignals von der idealen Geraden zu erreichen.

Die in der vorstehenden Beschreibung, in den Fig. 1 bis 5, sowie den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Kreisplattenfeder für eine Kraftmeßzelle mit zentral eingeleiteter Kraft, biegesteifem abstützenden Außenrand, einer ersten der Krafteinleitung zugewandten axialsymmetrisch profilierten Oberfläche und einer dieser gegenüberliegenden zweiten Oberfläche, auf der mindestens je ein Dehnungsmeßstreifen innerhalb und außerhalb einer umlaufenden radialdehnungsfreien Linie angeordnet ist,
dadurch gekennzeichnet, daß die erste und/oder zweite Oberfläche (6, 5) mindestens teilweise einen annähernd kegelförmigen Abschnitt (7) aufweisen, um bei Belastung mit der Kraft F zunächst eine Druck- und anschließend eine linearisierende bestimmte radial und tangential wirkende Zugspannung in der Kreisplattenfeder (8) zur erzeugen.

2. Kreisplattenfeder nach Anspruch 1
dadurch gekennzeichnet, daß der annähernd kegelförmige Abschnitt (7) derart bemessen ist, daß etwa bis zur Hälfte der maximalen Belastung nur Druckspannung in der Kreisplattenfeder (8) entsteht, wodurch sich der Linearitätsfehler der vorzeichenmäßig unterschiedlich beaufschlagten Dehnungsmeßstreifen (3, 4) nahezu ausgleicht.

3. Kreisplattenfeder nach Anspruch 2,
dadurch gekennzeichnet, daß die zweite Oberfläche (5) vollständig kegelförmig ausgebildet ist, und die erste Oberfläche (6) im Bereich zwischen einem zentralen zur Kraft F weisenden Ansatz (1) zur Einleitung derselben und dem Außenrand (2) quasi parallel zur zweiten Oberfläche (5) verläuft.

4. Kreisplattenfeder nach Anspruch 3,
dadurch gekennzeichnet, daß die auf der zweiten Oberfläche (5) angeordneten Dehnungsmeßstreifen (3, 4) aufgeklebt sind.

5. Kreisplattenfeder nach Anspruch 2,
dadurch gekennzeichnet, daß die zweite Oberfläche (5) im Bereich des Zentrums kegelförmig und sonst plan ausgebildet ist, und die erste Oberfläche (6) im Bereich zwischen einem zentralen Ansatz (1) zur Einleitung der Kraft F und dem Außenrand (2) zunächst kegelförmig und weiter außen plan ausgebildet ist.

6. Kreisplattenfeder nach Anspruch 5,
dadurch gekennzeichnet, daß der kegelförmige Bereich der zweiten Oberfläche (5) kegelstumpfartig ausgestaltet ist.

7. Kreisplattenfeder nach Anspruch 2,
dadurch gekennzeichnet, daß die zweite Oberfläche (5) vollständig plan ausgestaltet ist, und die erste Oberfläche (6) zwischen einem Ansatz (1) zur Einleitung der Kraft F bis hin zum Außenrand (2) quasi vollständig kegelförmig ausgestaltet ist.

8. Kreisplattenfeder nach Anspruch 5, 6 und 7,
dadurch gekennzeichnet, daß die auf der zweiten Oberfläche (5) angeordneten Dehnungsmeßstreifen (3, 4) in Dünnfilm-oder Dickschichttechnik aufgebracht sind.

9. Kreisplattenfeder nach einem oder mehreren der vorhergehenden Ansprüche,
dadurch gekennzeichnet, daß die Hysterese eines Signalverlaufes durch eine negative Linearitätskurve, bewirkt durch eine bestimmte kegelförmige Ausgestaltung der Oberflächen (5, 6) gezielt berücksichtigt ist.

10. Kreisplattenfeder nach einem oder mehreren der vorhergehenden Ansprüche,
dadurch gekennzeichnet, daß der Neigungswinkel des kegelförmigen Abschnitts (7) proportional zu dessen radialer Erstreckung abnimmt, und daß der Übergang zwischen der ersten Oberfläche (6) einierseits und dem Ansatz (1) und/oder dem Außenrand (2) andererseits mit einer Rundung ausgeführt ist.
